# EUROPÄISCHE PATENTANMELDUNG

(11) **EP 3 293 164 A1**
(43) Veröffentlichungstag der Anmeldung: **14.03.2018**
(21) Anmeldenummer: 16001995.6
(22) Anmeldetag: 13.09.2016
(51) Int. Cl.: C04B 30/00, C04B 20/10, C04B 20/06, F17C 13/00

(54) **VAKUUMISOLIERUNG MIT EINER ISOLIERSCHÜTTUNG AUS GEBLÄHTEN PERLITPARTIKELN**

(71) Anmelder: Linde Aktiengesellschaft, 80331 München (DE)
(72) Erfinder: Schönberger, Manfred, 83342 Tacherting (DE); Ehegartner, Florian, 84524 Neuötting (DE); Jell, Peter, 83254 Breitbrunn (DE)
(74) Vertreter: Meilinger, Claudia Sabine

(57) **Zusammenfassung**

Die vorliegende Erfindung betrifft eine Vakuumisolierung mit einer Isolierschüttung (440) aus geblähten Perlitpartikeln, wobei die einzelnen Oberflächen zumindest eines Teils der geblähten Perlitpartikel jeweils teilweise mit einem metallischen Werkstoff beschichtet sind.

## Beschreibung

Die Erfindung betrifft eine Vakuumisolierung mit einer Isolierschüttung aus geblähten Perlitpartikeln, einen Doppelwandbehälter mit einer solchen Vakuumisolierung sowie ein Verfahren zum Herstellen einer solchen Vakuumisolierung.

### Stand der Technik

Bei Perlit handelt es sich um ein vulkanisches Glas (Obsidian), das seinen Ursprung in vulkanischer Lava hat, wo es im Kontakt mit Wasser(dampf) unter extremem Druck rasch abgekühlt ist. Perlit zählt zu den Gesteinen und ist ein Aluminiumsilikat mit einem vergleichsweise hohen Anteil an Siliciumdioxid.

Im Zuge eines sogenannten Blähprozesses wird Perlit bzw. Rohperlit erhitzt, beispielsweise bei Temperaturen von bis zu 1000°C. Durch diese Erhitzung verdampft das in dem Gestein gebundene Wasser, wodurch sich das Volumen des Perlits bzw. das Volumen einzelner Perlitpartikel auf das bis zu 20-fache des Ursprungsvolumens aufblähen kann.

Schüttungen aus geblähtem Perlit bzw. geblähten Perlitpartikeln besitzen somit eine vergleichsweise geringe Dichte und sind leicht und widerstandsfähig. Aufgrund der geringen Wärmeleitfähigkeit von Perlit (Wärmeübertragung durch Wärmeleitung) werden Schüttungen aus geblähtem Perlit oftmals als Dämmung oder Isolierung verwendet.

Beispielsweise wird in der GB 853 584 ein doppelwandiger Isolierbehälter mit zwei Wänden beschrieben, die einen evakuierbaren Zwischenraum zur Aufnahme eines Isoliermaterials definieren (sog. Vakuumisolierung). Als Isoliermaterial kann eine Mischung aus einem Pulver mit geringer Wärmeleitfähigkeit, z.B. Perlit, und einem Wärmestrahlung abblockendem Material verwendet werden. Dabei ist es jedoch sehr aufwendig, diese beiden Materialen effektiv und isotrop durchzumischen, um eine gute Isolier- bzw. Dämmwirkung zu erzielen.

Es ist wünschenswert, eine verbesserte Vakuumisolierung mit einer Isolierschüttung aus geblähten Perlitpartikeln bereitzustellen, welche effektiv zur Isolierung bzw. Dämmung verwendet werden kann.

### Offenbarung der Erfindung

Die vorliegende Erfindung betrifft eine Vakuumisolierung mit einer Isolierschüttung aus geblähten Perlitpartikeln sowie einen Doppelwandbehälter mit einer derartigen Vakuumisolierung und ein Verfahren zum Herstellen einer derartigen Vakuumisolierung mit den Merkmalen der unabhängigen Patentansprüche. Vorteilhafte Ausgestaltungen sind Gegenstand der jeweiligen Unteransprüche sowie der nachfolgenden Beschreibung. Vorteile und vorteilhafte Ausgestaltungen der erfindungsgemäßen Vakuumisolierung, des erfindungsgemäßen Doppelwandbehälters sowie des erfindungsgemäßen Verfahrens ergeben sich aus der nachfolgenden Beschreibung jeweils in analoger Art und Weise.

Erfindungsgemäß sind die einzelnen Oberflächen zumindest eines Teils der geblähten Perlitpartikel jeweils teilweise mit einem metallischen Werkstoff beschichtet. Die einzelnen Oberflächen sind somit jeweils nicht komplett beschichtet, also nicht vollständig mit einer durchgehenden, ununterbrochenen Schicht überzogen, sondern es ist jeweils ein Teil bzw. es sind jeweils Teile der Oberfläche beschichtet (partielle, fleckenweise Beschichtung).

Ein beschichtetes Perlitpartikel weist somit eine Oberfläche auf, welche nur teilweise mit dem metallischen Werkstoff beschichtet ist. Die Oberfläche eines solchen Perlitpartikels weist somit zweckmäßigerweise mindestens einen ersten beschichteten Bereich und mindestens einen zweiten nicht-beschichteten Bereich auf. In diesen ersten Bereichen ist die Oberfläche also jeweils mit einer durchgehenden Schicht des metallischen Werkstoffs überzogen.

Es ist zumindest ein Teil der Perlitpartikel auf diese Weise beschichtet, insbesondere der überwiegende Teil, also mehr als 50%, insbesondere im Wesentlichen oder genau 70%, 75%, 80%, 85%, 90%, 95% oder 100%. Der verbleibende Teil kann entweder nicht beschichtet oder vollständig beschichtet sein, wobei mit Vorteil keine vollständig beschichteten Perlitpartikel vorliegen.

Es versteht sich, dass nicht alle Perlitpartikel identisch beschichtet sein müssen, sondern auch individuell und unterschiedlich beschichtet sein können. So können beispielsweise einzelne Perlitpartikel jeweils genau einen ersten beschichteten Bereich und genau einen zweiten nicht-beschichteten Bereich aufweisen, andere Perlitpartikel können beispielsweise wiederum mehrere beschichtete erste Bereiche aufweisen. Ebenso können Form und Größe der ersten bzw. zweiten Oberflächenbereiche der einzelnen Perlitpartikel variieren.

Im Rahmen der Erfindung wurde erkannt, dass sich besonders vorteilhafte Eigenschaften für die Vakuumisolierung ergeben, wenn insbesondere sämtliche geblähten Perlitpartikel jeweils nur zu einem Teil beschichtet sind. Durch die teilweise Beschichtung mit dem metallischen Werkstoff wird ein Reflexionsgrad der einzelnen Perlitpartikel im Vergleich zu unbeschichtetem Perlit erhöht. Wärmestrahlung wird somit durch die teilweise beschichteten Perlitpartikel reflektiert, so dass Wärme durch Wärmestrahlung nicht oder zumindest kaum durch die Schüttung übertragen werden kann.

Unbeschichteter Perlit besitzt zwar eine geringe Wärmeleitfähigkeit, also eine geringe Wärmeübertragung durch Wärmeleitung, kann jedoch als thermisch transparent angenommen werden und besitzt somit eine vergleichsweise hohe Wärmeübertragung durch Wärmestrahlung. Durch die partielle Beschichtung der geblähten Perlitpartikel im Rahmen der Erfindung kann die Wärmeübertragung durch Wärmestrahlung somit im Vergleich zu unbeschichtetem Perlit unterbunden oder zumindest erheblich reduziert werden.

Zwar kann auch durch vollständiges Beschichten der Perlitpartikel der Reflexionsgrad erhöht werden, jedoch besitzen vollständig beschichtete Perlitpartikel eine erhöhte Wärmeleitfähigkeit. Dadurch, dass sämtliche geblähte Perlitpartikel bei einer derartigen vollständigen Beschichtung komplett mit metallischem Werkstoff überzogen sind, ergibt sich eine Vielzahl von Kontaktpunkten zwischen den Metallschichten der einzelnen Perlitpartikeln. Über diese Kontaktpunkte kann eine effektive und hohe Wärmeleitung zwischen den einzelnen Perlitpartikeln erreicht werden. Vollständig beschichteter Perlit ist somit ungeeignet für die Verwendung als Isolierung bzw. Dämmstoff, da Wärme durch vollständig beschichteten Perlit nicht abgehalten und isoliert, sondern durch Wärmeleitung effektiv übertragen wird.

Im Gegensatz dazu ergeben sich bei partiell beschichtetem Perlit im Rahmen der Erfindung deutlich weniger und insbesondere kaum Kontaktpunkte zwischen Metallschichten der einzelnen Perlitpartikel. In partiell beschichtetem Perlit gibt es somit deutlich weniger und insbesondere kaum Wärmeübertragung durch Wärmeleitung.

Durch die partielle Beschichtung kann somit die Wärmeübertragung durch Wärmestrahlung im Vergleich zu unbeschichtetem Perlit reduziert werden, ohne dabei die Wärmeübertragung durch Wärmeleitung zu erhöhen. Die Schüttung aus teilweise beschichtetem Perlit besitzt somit eine sehr gute Isolier- bzw. Dämmwirkung, da Wärmeübertragung sowohl durch Wärmestrahlung als auch durch Wärmeleitung effektiv unterbunden wird. Weiterhin besitzt die Schüttung die die typischen positiven Eigenschaften von geblähtem Perlit. Sie besitzt eine vergleichsweise geringe Dichte, ist leicht, widerstandsfähig und nicht brennbar.

Die Isolierschüttung gemäß Erfindung weist somit erhebliche Vorteile gegenüber herkömmlichen Perlitschüttungen auf. Eine derartige herkömmliche Perlitschüttung ist beispielsweise in der WO 2008/118827 A1 offenbart, gemäß welcher ein mineralisches Material wie Perlit mit einer Schicht aus wenigstens einem Metall beschichtet wird. Diese Beschichtung dient beispielsweise dazu, um Festigkeit, Härte und/oder Farbe des mineralischen Materials zu verändern. Die WO 2008/118827 A1 lehrt dabei, die einzelnen mineralischen Partikel zumindest im Wesentlichen jeweils komplett zu beschichten. Bei derartig beschichtetem Perlit ergibt sich jedoch eine Vielzahl von Kontaktpunkten zwischen den Metallschichten der einzelnen Perlitpartikeln, so dass derartiger herkömmlicher Perlit eine sehr hohe Wärmeleitfähigkeit aufweist und nur bedingt oder überhaupt nicht für die Verwendung als Vakuumisolierung geeignet ist.

Vorteilhafterweise ist zwischen 20% und 80% einer einzelnen Oberfläche mit dem metallischen Werkstoff beschichtet. Vorzugsweise ist zwischen 40% und 60% einer einzelnen Oberfläche mit dem metallischen Werkstoff beschichtet. Besonders bevorzugt ist im Wesentlichen oder genau 50% einer einzelnen Oberfläche mit dem metallischen Werkstoff beschichtet. Statistisch betrachtet sind in diesem Fall ca. 25% der Kontaktstellen zwischen den geblähten Perlitpartikeln Kontaktpunkte zwischen Metallschichten. Insbesondere ergibt sich in diesem Fall eine besonders vorteilhafte Möglichkeit, um sowohl Wärmeübertragung durch Wärmestrahlung als auch die Wärmeübertragung durch Wärmeleitung jeweils effektiv zu unterbinden.

Vorzugsweise ist ein Drittel einer einzelnen Oberfläche mit dem metallischen Werkstoff beschichtet. Dieser Fall stellt ebenfalls eine besonders vorteilhafte Möglichkeit dar, um sowohl Wärmeübertragung durch Wärmestrahlung als auch durch Wärmeleitung jeweils effektiv zu unterbinden. Besonders bevorzugt ist daher zwischen einem Drittel und 50% einer einzelnen Oberfläche mit dem metallischen Werkstoff beschichtet.

Die Vakuumisolierung ist vorteilhaft zur Verwendung für kryogene Anwendungen eingerichtet. Besonders vorteilhaft eignet sich die Vakuumisolierung im Tieftemperaturbereich (insbesondere zwischen ca. -75°C und -269°C), beispielsweise zur Isolierung von Tieftemperaturtanks zur Speicherung von tiefkalt verflüssigten Gasen. Beispielsweise eignet sich die Vakuumisolierung für Tieftemperaturtanks zur Speicherung von tiefkaltem Helium bei ca. -269°C, von tiefkaltem Wasserstoff bei ca. -253°C, von tiefkaltem Stickstoff bei ca. -196°C, von tiefkaltem Argon bei ca. -186°C, von tiefkaltem Sauerstoff bei ca. -183°C, von tiefkaltem Methan bei ca. -161 °C oder von tiefkaltem CO₂ bei ca. -78°C.

Beispielsweise bei der Isolierung bzw. Dämmung von Behältern bei normalen Umgebungsbedingungen, z.B. bei Lagerung des entsprechenden Behälters im Freien oder innerhalb eines Gebäudes, trägt Wärmestrahlung einen großen Teil zur Gesamtwärmeübertragung bei. Unbeschichteter Perlit eignet sich aufgrund seiner vergleichsweise hohen strahlungsbedingten Wärmeübertragung in derartigen Fällen nur bedingt oder gar nicht zur Dämmung bzw. Isolierung. Durch die Erhöhung des Reflexionsgrads durch die teilweise Beschichtung kann die Schüttung unter derartigen Bedingungen effektiv der Isolierung dienen.

Je höher der Temperaturunterschied zwischen dem Inhalt des zu isolierenden Behälters und der Umgebungstemperatur des Behälters, desto höher wird der Anteil der Wärmeleitung. Komplett beschichteter Perlit eignet sich für derartige Anwendungen daher nur bedingt oder kaum, wohingegen durch den teilweise beschichteten Perlit auch unter derartigen Bedingungen eine effektive Isolierung gewährleistet werden kann.

Im Zuge des erfindungsgemäßen Verfahrens zum Herstellen der erfindungsgemäßen Vakuumisolierung werden Perlitpartikel im Zuge eines Blähprozesses erhitzt. Die einzelnen Oberflächen der einzelnen Perlitpartikel werden jeweils vor dem Blähprozess und/oder während des Blähprozesses und/oder nach dem Blähprozess mit dem metallischen Werkstoff beschichtet. Durch das Erhitzen, insbesondere bei Temperaturen von bis zu 1000°C, vergrößert sich das Volumen der einzelnen Perlitpartikel im Zuge des Blähprozesses, insbesondere auf das bis zu 20-fache. Als geblähte Perlitpartikel werden in diesem Zusammenhang Perlitpartikel bezeichnet, deren Volumen sich im Zuge des Blähprozesses im Vergleich zu ihrem Ursprungsvolumens vor dem Blähprozess vergrößert hat.

Beim Beschichten vor und/oder während des Blähprozesses wird vorzugsweise der Effekt ausgenutzt, dass die einzelnen Perlitpartikel noch nicht vollständig aufgebläht sind und sich nach Zufuhr des metallischen Werkstoffs noch weiter ausdehnen. Die derartig aufgebrachte Beschichtung kann durch das weitere Ausdehnen der Perlitpartikel aufreißen, was in einer partiellen Beschichtung resultiert.

Die Perlitpartikel werden vorzugsweise in einem Flugstrom einem Blähofen zugeführt, in welchem der Blähprozess durchgeführt wird. Als Flugstrom sei insbesondere eine Strömung eines Gemischs aus einem Trägergas, beispielsweise Luft, und den Perlitpartikeln zu verstehen. Im Folgenden werden die noch nicht dem Blähprozess unterzogenen Perlitpartikel als Rohperlit bezeichnet. Nach dem durchgeführten Blähprozess wird der geblähte Perlit bevorzugt mittels eines Flugstroms aus dem Blähofen hinaus transportiert. Dabei kann beispielsweise dasselbe Trägergas wie bei der Zufuhr des Rohperlits verwendet werden.

Gemäß einer vorteilhaften Ausführung wird der metallische Werkstoff vor dem Blähprozess den Perlitpartikeln derart zugeführt, dass die Perlitpartikel vor dem Blähprozess vollständig oder zumindest im Wesentlichen vollständig mit dem metallischen Werkstoff beschichtet werden. Dieses Beschichten des Rohperlits kann beispielsweise durchgeführt werden, bevor der Rohperlit dem Blähofen zugeführt wird. Der entsprechende beschichtete Rohperlit kann anschließend in dem Flugstrom dem Blähofen zugeführt werden. Es ist auch denkbar, den Rohperlit zunächst dem Blähofen zuzuführen, ihn dort zu beschichten und drauffolgend zu erhitzen.

Wie oben erläutert reißt die (nahezu) vollständige Beschichtung des Rohperlits während des Blähens auf. Da der Oberflächenzuwachs der Perlitpartikel während des Blähprozesses insbesondere proportional mit der Vergrößerung des Volumens einhergeht, kann die partielle Beschichtung der Oberfläche somit zweckmäßigerweise in definierter Weise erzeugt werden.

Vorteilhafterweise werden die Perlitpartikel bzw. das Rohperlit zusammen mit dem metallischen Werkstoff in dem Flugstrom dem Blähofen zugeführt, um die Perlitpartikel während des Blähprozesses zu beschichten. Der metallische Werkstoff kann dabei beispielsweise in Pulverform dem Flugstrom zugeführt werden. In dem Flugstrom kann insbesondere eine gute, isotrope Durchmischung des Rohperlits mit dem metallischen Werkstoff erreicht werden. Zu Beginn des Blähprozesses schmilzt der metallische Werkstoff und lagert sich an der Oberfläche der einzelnen Perlitpartikel an.

Alternativ oder zusätzlich können die Perlitpartikel zunächst dem Blähofen, in welchem der Blähprozess durchgeführt wird, und anschließend kann der metallische Werkstoff den Perlitpartikeln zugeführt werden, um die Perlitpartikel während des Blähprozesses zu beschichten. Beispielsweise kann auf den Rohperlit in dem Blähofen eine Schicht aus dem pulverförmigen metallischen Werkstoff aufgetragen werden.

Vorteilhafterweise werden die geblähten Perlitpartikel in einem Flugstrom aus dem Blähofen, in welchem der Blähprozess durchgeführt wurde, hinaus transportiert. Alternativ oder zusätzlich wird der metallische Werkstoff, z.B. in Pulverform, diesem Flugstrom zugeführt, um die Perlitpartikel nach dem Blähprozess zu beschichten. Zweckmäßigerweise besitzt der geblähte Perlit in dem Flugstrom in einem gewissen Bereich eine Temperatur, die höher als die Schmelztemperatur des metallischen Werkstoffs ist. Da sich der geblähte Perlit außerhalb des Blähofen insbesondere rasch abkühlt, fällt die Temperatur zweckmäßigerweise schnell genug unter die Schmelztemperatur, so dass eine vollständige Beschichtung der Oberfläche verhindert wird. Durch die anschließende rasche Abkühlung der geblähten, teilweise beschichteten Perlitpartikel kann insbesondere eine Schmelze-Agglomeration unterbunden werden.

Bevorzugt werden die Perlitpartikel elektrostatisch aufgeladen, bevor die Oberfläche der geblähten Perlitpartikel jeweils teilweise mittels des metallischen Werkstoffs . beschichtet wird. Durch diese elektrostatische Aufladung kann die Anlagerung des metallischen Werkstoffs an dem Perlit unterstützt und beschleunigt werden.

Als Beschichtungsverfahren werden vorteilhafterweise ein physikalisches Dampfabscheidungsverfahren (PVD) und/oder ein chemisches Dampfabscheidungsverfahren (CVD) und/oder eine Flüssigphasenabscheidung und/oder eine Festphasenabscheidung, insbesondere mit anschließendem Aufschmelzen, durchgeführt, um die Oberfläche der geblähten Perlitpartikel jeweils teilweise mittels des metallischen Werkstoffs zu beschichten.

Im Zuge des physikalischen Dampfabscheidungsverfahrens (PVD) wird mithilfe physikalischer Verfahren (z.B. z.B. mittels thermischem Verdampfen, Elektronenstrahlverdampfen, Laserstrahlverdampfen, Lichtbogenverdampfen, usw.) der metallische Werkstoff zweckmäßigerweise in die Gasphase überführt und dem Perlit zugeführt, wo es kondensiert und diesen beschichtet.

fnsbesondere wird der metallische Werkstoff im Zuge des chemischen Dampfabscheidungsverfahrens (CVD) in der Gasphase gegebenenfalls mit weiteren Reaktionsgasen zu dem Perlit geführt, so dass Perlit und metallischer Werkstoff miteinander reagieren und chemisch gebunden werden.

Im Zuge der Flüssigphasenabscheidung wird der metallische Werkstoff zweckmäßigerweise in flüssiger Phase auf den Perlit aufgebracht. Für die Festphasenabscheidung wird der metallische Werkstoff zunächst als Feststoff, z.B. in Pulverform (sog. Pulverbeschichten), auf den Perlit aufgebracht und daraufhin aufgeschmolzen.

Vorzugsweise werden ein niedrigschmelzendes Reinmetall und/oder eine niedrigschmelzende Legierung als metallischer Werkstoff verwendet. Ein derartiges niedrigschmelzendes Reinmetall bzw. eine derartige niedrigschmelzende Legierung besitzen jeweils einen Schmelzpunkt geringer als 1000°C. Der Perlit kann insbesondere durch Flüssigphasenabscheidung und/oder Festphasenabscheidung mittels derartiger niedrigschmelzender Reinmetalle/Legierungen teilweise beschichtet werden.

Alternativ oder zusätzlich kann vorzugsweise eine höherschmelzendes Reinmetall und/oder eine höherschmelzende Legierung als metallischer Werkstoff verwendet werden, welche insbesondere jeweils einen Schmelzpunkt von über 1000°C besitzen. Der Perlit kann insbesondere durch physikalisches und/oder chemisches Dampfabscheidungsverfahren mittels derartiger höherschmelzender Reinmetalle/Legierungen teilweise beschichtet werden.

Alternativ oder zusätzlich können vorzugsweise metallisch-keramische Verbindung (z.B. Metall-Silane) und/oder ein Halbmetall und/oder eine Legierung aus Metall(en) und Halbmetall(en) und/oder eine Legierung aus Halbmetallen als metallischer Werkstoff verwendet werden.

Vorzugsweise besitzen die geblähten Perlitpartikel eine Partikelgröße (Körnung/Korngröße) von bis zu 6 mm. Derartiger geblähter Perlit kann eine Dichte (Schüttdichte) von ca. 80 kg/m³ besitzen. Weiter vorteilhaft besitzen die geblähten Perlitpartikel eine Partikelgröße von bis 3 mm, bevorzugt von bis zu 2 mm. Bei einer derartigen Partikelgröße kann der geblähte Perlit insbesondere eine Dichte (Schüttdichte) zwischen 50 kg/m³ und 60 kg/m³ besitzen. Durch derartig geringe Dichten besitzt der entsprechende Perlit insbesondere eine geringe Feststoffwärmeleitfähigkeit. Darüber hinaus ist Perlit mit derartigen Dichten insbesondere gut durchströmbar und evakuierbar.

Insbesondere je größer die Körnung bzw. Partikelgröße des geblähten Perlits ist, desto besser kann der Perlit durchströmt werden und umso leichter kann ein Vakuum erreicht werden. Evakuierte Schüttungen aus herkömmlichem, nicht beschichtetem Perlit mit derartig großer Körnung besitzen zumeist einen hohen Anteil an Wärmeübertragung durch Wärmestrahlung. Im Gegensatz dazu weisen evakuierte Schüttungen aus teilweise beschichtetem Perlit mit derartig großer Körnung insbesondere eine sehr gute Isolier- bzw. Dämmwirkung auf.

Gemäß einer vorteilhaften Ausführung wird die Schüttung in einem Doppelwandbehälter mit einer Innenwand, einer Außenwand und einem evakuierbaren Zwischenraum zwischen der Innenwand und der Außenwand verwendet. Die Schüttung wird vorzugsweise in den evakuierbaren Zwischenraum gefüllt. Gemäß obiger Erläuterung ist die Schüttung mit dem teilweise beschichteten Perlit besonders geeignet für einen derartigen Doppelwandbehälter und ermöglicht eine Dämmung bzw. Isolierung mit besonders hoher Qualität. Zweckmäßigerweise kann der Doppelwandbehälter für kryogene Anwendungen im Tieftemperaturbereich verwendet werden, beispielsweise als Tieftemperaturtank.

Die Erfindung betrifft weiterhin einen derartigen Doppelwandbehälter. Vorteile und vorteilhafte Ausgestaltungen eines derartigen erfindungsgemäßen Doppelwandbehälters ergeben sich aus der oben Beschreibung des erfindungsgemäßen Verfahrens in analoger Art und Weise.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figuren 1 bis 3: zeigen jeweils schematisch die Herstellung einer Isolierschüttung aus Perlit für eine Vakuumisolierung gemäß einer bevorzugten Ausführungsform eines erfindungsgemäßen Verfahrens.
- Figur 4: zeigt schematisch eine bevorzugte Ausgestaltung eines erfindungsgemäßen Doppelwandbehälters in einer Querschnittsansicht.
- Figur 5: zeigt schematisch eine bevorzugte Ausgestaltung eines erfindungsgemäßen Doppelwandbehälters in einer Längsschnittansicht.

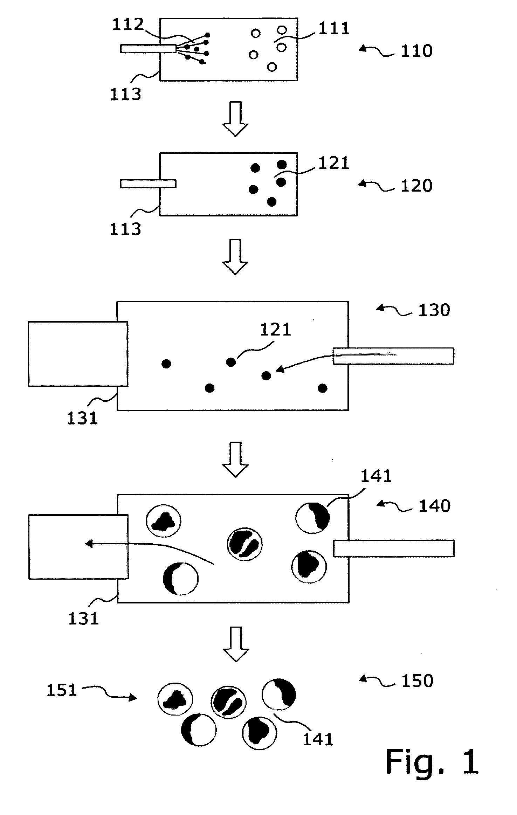

In den Figuren 1 bis 3 ist jeweils schematisch die Herstellung einer Isolierschüttung aus Perlit für eine Vakuumisolierung gemäß einer bevorzugten Ausführungsform eines erfindungsgemäßen Verfahrens dargestellt.

In Figur 1 ist schematisch dargestellt, wie Perlitpartikel vor einem Blähprozess beschichtet werden. Die Größenverhältnisse sind nicht maßstabsgetreu dargestellt.

In einem Schritt 110 wird Rohperlit 111 beispielsweise im Zuge eines physikalischen Dampfabscheidungsverfahrens komplett mittels eines metallischen Werkstoffs beschichtet. Der metallische Werkstoff wird dabei z.B. mittels thermischen Verdampfens verdampft und in der Gasphase 112 dem Rohperlit 111 zugeführt, beispielsweise in einer evakuierten Beschichtungskammer 113. Nach dem physikalischen Dampfabscheidungsverfahren liegt in Schritt 120 im Wesentlichen vollständig mit dem metallischen Werkstoff beschichteter Rohperlit 121 vor.

Dieser vollständig beschichtete Rohperlit 121 wird in Schritt 130 einem Blähofen 131 zugeführt. In diesem Blähofen 131 wird ein Blähprozess des beschichteten Rohperlits 121 durchgeführt, im Zuge dessen der Rohperlit 121 bei 1000°C erhitzt wird. Das Volumen des Rohperlits 131 vergrößert sich dabei auf das bis zu 20-fache. Durch diese Ausdehnung reißt die Schicht aus dem metallischen Werkstoff auf und es wird eine partielle Beschichtung erzeugt.

Wie in Schritt 140 dargestellt ist, liegen somit nach dem Blähprozess aufgeblähte Perlitpartikel 141 vor, deren Oberfläche jeweils teilweise mit dem metallischen Werkstoff beschichtet ist.

Jedes einzelne der aufgeblähten Perlitpartikel 141 weist somit jeweils eine Oberfläche auf, welche nur teilweise mit dem metallischen Werkstoff beschichtet ist. Die Oberfläche eines jedes einzelnen Perlitpartikels 141 weist somit zweckmäßigerweise mindestens einen ersten beschichteten Bereich und mindestens einen zweiten nicht-beschichteten Bereich auf. In diesen ersten Bereichen ist die Oberfläche also jeweils mit einer durchgehenden Schicht des metallischen Werkstoffs überzogen. Vorzugsweise ist jeweils zwischen einem Drittel und 50% der Oberfläche eines jeden einzelnen Perlitpartikels 141 mit dem metallischen Werkstoff beschichtet.

Die teilweise beschichteten, aufgeblähten Perlitpartikel 141 werden in Schritt 150 aus dem Blähofen transportiert und aufgeschüttet, wodurch eine Schüttung 151 aus Perlit erzeugt wird. Die teilweise Beschichtung ist durch die dunklen Bereiche auf den Perlitpartikeln 141 verdeutlicht.

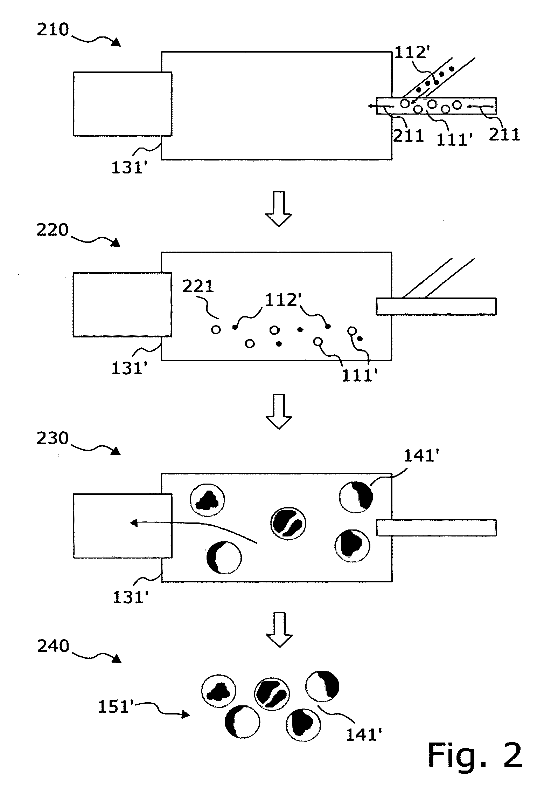

In Figur 2 ist schematisch dargestellt, wie Perlitpartikel während des Blähprozesses beschichtet werden.

In einem Schritt 210 wird Rohperlit 111' in einem Flugstrom 211 einem Blähofen 131' zugeführt. Beispielsweise wird Luft als Trägergas für den Flugstrom 211 verwendet. Diesem Flugstrom 211 wird ein metallischer Werkstoff 112' in Pulverform zugeführt. Der Rohperlit 111' wird somit zusammen mit dem metallischen Werkstoff 112' in dem Flugstrom 211 dem Blähofen 131' zugeführt.

In Schritt 220 befindet sich ein isotropes Gemisch 221 aus Rohperlit 111' und metallischem Werkstoff 112' in dem Blähofen 131' und der Blähprozess wird gestartet. Durch das Erhitzen des Gemischs 221 bei 1000°C dehnt sich das Volumen des Rohperlits 111' analog zu der obigen Beschreibung in Bezug auf Figur 1 auf das bis zu 20-fache aus. Weiterhin schmilzt der metallische Werkstoff 112' und lagert sich an den Oberflächen der sich aufblähenden Perlitpartikel an, wodurch eine partielle Beschichtung des Perlits erzeugt wird.

Analog zu Schritt 140 aus Figur 1 liegen auch in Schritt 230 nach dem Blähprozess aufgeblähte Perlitpartikel 141' vor, deren Oberfläche jeweils teilweise mit dem metallischen Werkstoff beschichtet ist. Die teilweise beschichteten, aufgeblähten Perlitpartikel 141' werden in Schritt 240 analog zu Schritt 150 aus dem Blähofen 131' transportiert und aufgeschüttet, wodurch eine Schüttung 151' aus Perlit erzeugt wird.

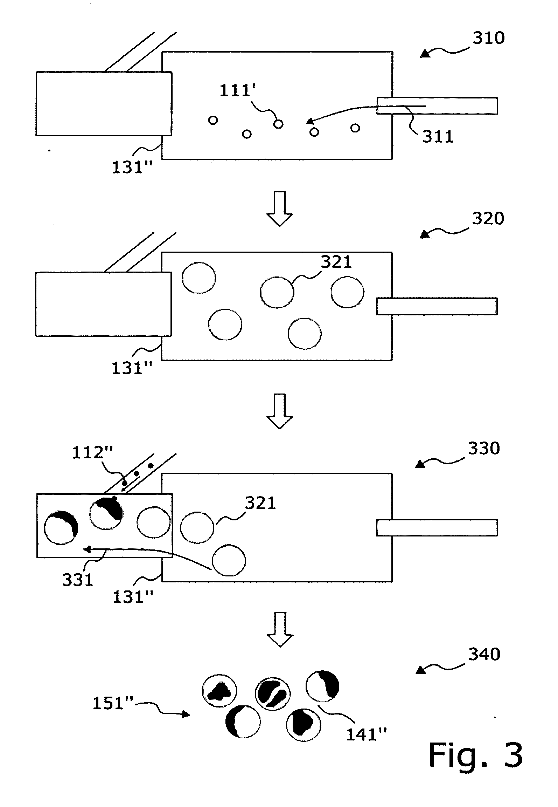

In Figur 3 ist schematisch dargestellt, wie Perlitpartikel nach dem Blähprozess beschichtet werden.

Rohperlit 111" wird dabei zunächst in einem Schritt 310 in einem Flugstrom 311 einem Blähofen 131" zugeführt, beispielsweise mit Luft als Trägergas. Daraufhin wird der Blähprozess gestartet, wodurch sich die Perlitpartikel 111" analog zu obiger Beschreibung in Bezug auf Figur 1 und 2 auf das bis zu 20-fache aufblähen. In Schritt 320 liegen nach dem Blähprozess aufgeblähte, unbeschichtete Perlitpartikel 321 vor.

Diese werden in Schritt 330 mittels eines Flugstroms 331, für welchen beispielsweise ebenfalls Luft als Trägergas verwendet wird, aus dem Blähofen 131" transportiert. Diesem Flugstrom 331 wird ein metallischer Werkstoff 112" in Pulverform zugeführt. Die aufgeblähten Perlitpartikel 321 besitzen in dem Flugstrom 331 zumindest unmittelbar nach Austritt aus dem Blähofen 131" eine Temperatur, die höher ist als die Schmelztemperatur des metallischen Werkstoffs 112", so dass der metallische Werkstoff 112" in dem Flugstrom schmilzt und sich an den Oberflächen der aufgeblähten Perlitpartikel 321 anlagert, wodurch eine partielle Beschichtung des Perlits erzeugt wird.

Analog zu Schritt 150 und 240 werden die teilweise beschichteten, aufgeblähten Perlitpartikel 141" in Schritt 340 aufgeschüttet, wodurch eine Schüttung 151" aus Perlit erzeugt wird.

Durch sehr geringe Wärmeübertragung dieser Isolierschüttungen 151, 151', 151" besitzt eine Vakuumisolierung mit einer oder mehreren der oben beschriebenen Isolierschüttungen 151, 151', 151" besonders vorteilhafte Isoliereigenschaften. Vorteilhafterweise wird eine derartige bevorzugte Ausgestaltung einer erfindungsgemäßen Vakuumisolierung mit einer oder mehreren der Isolierschüttungen 151, 151', 151" in einem Doppelwandbehälter verwendet.

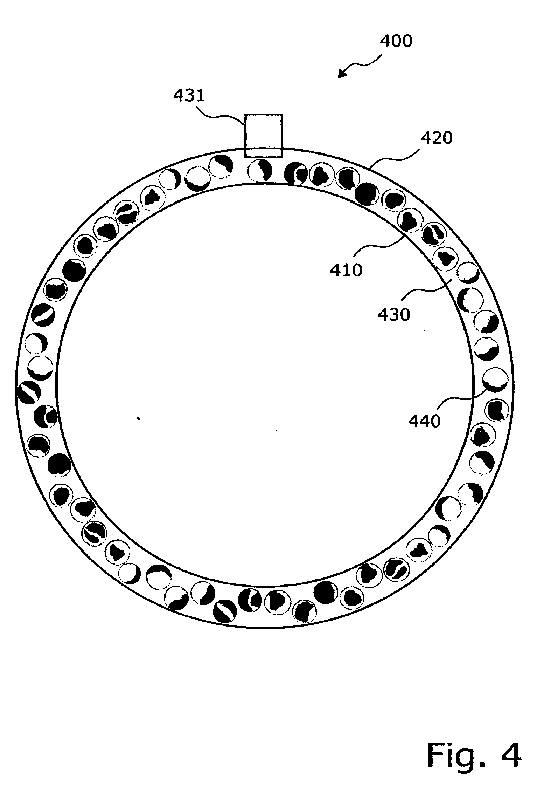

Figur 4 zeigt schematisch eine bevorzugte Ausgestaltung eines erfindungsgemäßen Doppelwandbehälters 400 in einer Querschnittsansicht.

Der Doppelwandbehälter 400 weist eine Innenwand 410, eine Außenwand 420 und einem evakuierbaren Zwischenraum 430 zwischen der Innenwand und der Außenwand auf. Um den Zwischenraum 430 zu evakuieren kann beispielsweise ein entsprechendes Ventil 431 vorgesehen sein.

Der Zwischenraum 430 ist mit einer erfindungsgemäßen Schüttung 440 gefüllt, beispielsweise mit einer oder mehrerer der Schüttungen 151, 151' oder 151 ". Nachdem der Zwischenraum 430 mit der Schüttung 440 gefüllt wurde, wurde dieser evakuiert.

Der Doppelwandbehälter 400 kann beispielsweise als Tieftemperaturtank verwendet werden, z.B. zur Lagerung von tiefkalt verflüssigten Gasen, wie beispielsweise von flüssigem Stickstoff.

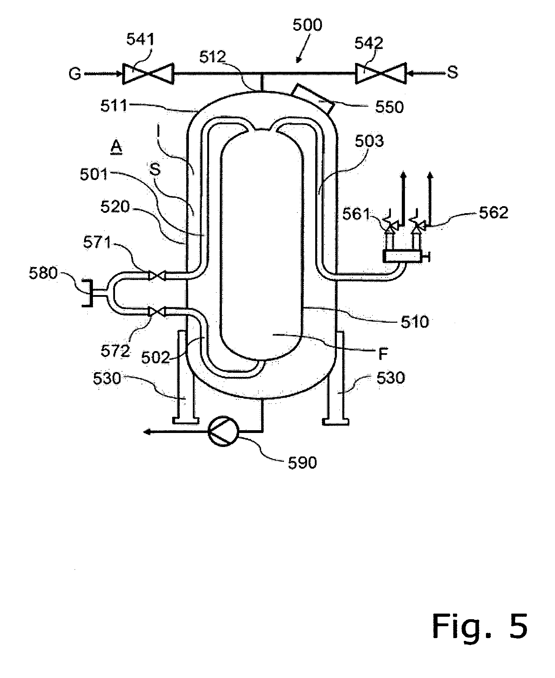

Figur 5 zeigt schematisch eine bevorzugte Ausgestaltung eines erfindungsgemäßen Doppelwandbehälters 500 in einer Längsschnittansicht.

Der Doppelwandbehälters 500 weist einen Außenbehälter mit einer Außenwand 520 auf, der einen Innenbehälter mit einer Innenwand 510 umgibt, wobei zwischen der Außenwand 520 und der Innenwand 510 ein Zwischenraum bzw. Isolierraum I vorgesehen ist, der zum Aufnehmen einer Isolierschüttung S eingerichtet ist, beispielsweise zum Aufnehmen einer oder mehrerer der Schüttungen 151, 151' oder 151 ". Der Behälter 500 ist über Füße 530 auf einem geeigneten Untergrund gelagert, wobei die Füße 530 am Behälterboden bzw. am Mantel des Außenbehälters festgelegt sind. Andere Abstützungen des Behälters 500 sind auch denkbar. Der Innenbehälter ist über einen Stutzen 580 mit einem Fluid F, insbesondere in Form eines kryogenen Mediums, befüllbar bzw. dieses kann über den Stutzen 580 aus dem Innenbehälter abgelassen werden. Hierzu ist der Stutzen 580 über je ein Ventil 571 bzw. 572 sowie eine nachfolgende Rohrleitung 501 bzw. 502 mit dem Kopf des Innenbehälters bzw. dem Sumpf des Innenbehälters verbunden. Steigt im Innenbehälter aufgrund einer unzureichenden Isolierung im Isolierraum I der Druck einer gasförmigen Phase des in dem Innenraum des Innenbehälters befindlichen Fluids F, kann der entstehende Druck bzw. ein Teil der gasförmigen Phase des Fluids F über die vom Kopf des Innenbehälters abgehende Rohrleitung 503 sowie sich daran anschließende Sicherheitsventile 561, 562 an die Umgebung A abgegeben werden, so dass der Druck im Innenbehälter sinkt.

Der Doppelwandbehälter 500 kann wie nachfolgend beschrieben mit einer bevorzugten Ausgestaltung der erfindungsgemäßen Vakuumisolierung isoliert werden. Über ein Ventil 542 wird über Kopf des Behälters 500 über einen am Behälter 500 vorgesehenen Einlass 512 Isolierschüttung S in Form von einer oder mehreren der Schüttungen 151, 151' oder 151" in den Isolierraum I eingefüllt. Anschließend wird bei geschlossenem Ventil 542 der isolierraum I mittels einer Pumpe 590 evakuiert bzw. auf einen Unterdruck gegenüber dem im Außenraum A herrschenden Druck gebracht. Es kann auch zunächst evakuiert werden und dann das Isolierschüttgut S in den Isolierraum I eingefüllt werden. Daraufhin wird der Behälter 500 mittels eines an der Außenseite des Außenbehälters an einem oberen Abschnitt 511 vorgesehen Vibrators 550 in eine Vibration bzw. Schwingung versetzt, die zu einer Verdichtung des in den Isolierraum I eingefüllten Isolierschüttguts S führt. Nach Beendigung der Vibrationsphase wird optional der Isolierraum I über Kopf über ein weiteres Ventil 541, das in Strömungsverbindung mit dem Einlass 512 steht, mit Luft G (oder Stickstoff) beaufschlagt (sogenannter Luftschlag) und hiernach das vorgenannte Verfahren ggf. wiederholt, bis der Isolierraum I wie gewünscht mit dem Isolierschüttgut S befüllt ist. Diese Abfolge von Vibrationen und Luftschlägen führt insbesondere zu einer besonders guten Verdichtung des Isolierschüttguts S.

### Bezugszeichenliste

- 111: Rohperlit
- 111': Rohperlit
- 111": Rohperlit
- 112: metallischer Werkstoff in Gasphase
- 112': metallischer Werkstoff in Pulverform
- 112": metallischer Werkstoff in Pulverform

- 113: evakuierte Beschichtungskammer
- 121: vollständig beschichteter Rohoperlit

- 131: Blähofen
- 131': Blähofen
- 131": Blähofen
- 141: teilweise beschichtete, aufgeblähte Perlitpartikel
- 141': teilweise beschichtete, aufgeblähte Perlitpartikel
- 141": teilweise beschichtete, aufgeblähte Perlitpartikel
- 151: Schüttung aus Perlit
- 151': Schüttung aus Perlit
- 151": Schüttung aus Perlit

- 211: Flugstrom
- 221: isotropes Gemisch aus Rohperlit und metallischem Werkstoff
- 311: Flugstrom
- 321: aufgeblähte, unbeschichtete Perlitpartikel
- 331: Flugstrom

- 400: Doppelwandbehälter, Tieftemperaturtank
- 410: Innenwand
- 420: Außenwand
- 430: evakuierbarer Zwischenraum
- 431: Ventil
- 440: Schüttung aus Perlit
- 500: Behälter
- 501: Rohrleitung
- 502: Rohrleitung
- 503: Rohrleitung
- 510: Innenwand
- 511: Oberer Abschnitt
- 512: Einlass
- 520: Außenwand
- 530: Fuß
- 541: Ventil
- 542: Ventil
- 550: Vibrator
- 561: Sicherheitsventil
- 562: Sicherheitsventil
- 571: Ventil
- 572: Ventil
- 580: Einlassstutzen
- 590: Pumpe (insbesondere Vakuumpumpe)
- A: Außenraum, z.B. Atmosphäre
- F: Fluid
- G: Gas, z.B. Luft
- I: Isolierraum
- S: Isolierschüttung

## Patentansprüche

1. Vakuumisolierung mit einer Isolierschüttung (151, 151', 151", 440, S) aus geblähten Perlitpartikeln (141, 141', 141"),
**dadurch gekennzeichnet, dass**
die einzelnen Oberflächen zumindest eines Teils der geblähten Perlitpartikel (141, 141', 141") jeweils teilweise mit einem metallischen Werkstoff (112, 112', 112") beschichtet sind.

2. Vakuumisolierung nach Anspruch 1, wobei zwischen 20% und 80%, insbesondere zwischen 40% und 60%, insbesondere im Wesentlichen oder genau 50% einer einzelnen Oberfläche mit dem metallischen Werkstoff (112, 112', 112") beschichtet ist.

3. Vakuumisolierung nach Anspruch 2, wobei zwischen einem Drittel und 50% einer einzelnen Oberfläche mit dem metallischen Werkstoff (112, 112', 112") beschichtet ist.

4. Vakuumisolierung nach einem der vorstehenden Ansprüche, wobei ein niedrigschmelzendes Reinmetall und/oder eine niedrigschmelzende Legierung und/oder eine höherschmelzendes Reinmetall und/oder eine höherschmelzende Legierung und/oder eine metallisch-keramische Verbindung und/oder ein Halbmetall und/oder eine Legierung aus Metallen und Halbmetallen und/oder eine. Legierung aus Halbmetallen als metallischer Werkstoff (112, 112', 112") verwendet werden.

5. Vakuumisolierung nach einem der vorstehenden Ansprüche wobei die geblähten Perlitpartikel (141, 141', 141") eine Partikelgröße von bis zu 6 mm besitzen, insbesondere von bis zu 3 mm, bevorzugt von bis zu 2 mm.

6. Vakuumisolierung nach einem der vorstehenden Ansprüche, dazu eingerichtet, für kryogene Anwendungen verwendet zu werden.

7. Vakuumisolierung nach einem der vorstehenden Ansprüche, dazu eingerichtet in einem Doppelwandbehälter (400, 500) mit einer Innenwand (410, 510), einer Außenwand (420, 520) und einem evakuierbaren Zwischenraum (430, I) zwischen der Innenwand (410, 510) und der Außenwand (420, 520) verwendet zu werden, wobei die Isolierschüttung (151, 151', 151", 440, S) in den evakuierbaren Zwischenraum (430, I) gefüllt ist.

8. Doppelwandbehälter (400, 500) mit einer Innenwand (410, 510), einer Außenwand (420, 520) und einem evakuierbaren Zwischenraum (430, I) zwischen der Innenwand (410, 510) und der Außenwand (420, 520),
**dadurch gekennzeichnet, dass**
der evakuierbare Zwischenraum (430, I) eine Vakuumisolierung nach einem der vorstehenden Ansprüche aufweist.

9. Verfahren zum Herstellen einer Vakuumisolierung nach einem der vorstehenden Ansprüche, wobei Perlitpartikel (111, 111', 111") im Zuge eines Blähprozesses erhitzt werden, wobei die einzelnen Oberflächen der einzelnen Perlitpartikel (111, 111', 111") jeweils vor dem Blähprozess und/oder während des Blähprozesses und/oder nach dem Blähprozess mit dem metallischen Werkstoff (112, 112', 112") beschichtet werden.

10. Verfahren nach Anspruch 9, wobei der metallische Werkstoff (112) vor dem Blähprozess den Perlitpartikeln (111) derart zugeführt wird, dass die Perlitpartikel vor dem Blähprozess vollständig oder zumindest im Wesentlichen vollständig mit dem metallischen Werkstoff beschichtet werden (121).

11. Verfahren nach Anspruch 9 oder 10, wobei die Perlitpartikel (111') zusammen mit dem metallischen Werkstoff (112') in einem Flugstrom (211) einem Blähofen (131'), in welchem der Blähprozess durchgeführt wird, zugeführt werden, um die Perlitpartikel (111') während des Blähprozesses zu beschichten.

12. Verfahren nach einem der Ansprüche 9 bis 11, wobei die Perlitpartikel (111') einem Blähofen (131'), in welchem der Blähprozess durchgeführt wird, zugeführt werden und wobei der metallische Werkstoff (112') den Perlitpartikel in dem Blähofen (131') zugeführt wird, um die Perlitpartikel (111') während des Blähprozesses zu beschichten.

13. Verfahren nach einem der Ansprüche 9 bis 12, wobei die geblähten Perlitpartikel (321) in einem Flugstrom (331) aus einem Blähofen (131"), in welchem der Blähprozess durchgeführt wurde, hinaus transportiert werden und wobei der metallische Werkstoff (112") dem Flugstrom (331) zugeführt wird, um die Perlitpartikel (321) nach dem Blähprozess zu beschichten.

14. Verfahren nach einem der Ansprüche 9 bis 13, wobei die Perlitpartikel (111, 111', 111") elektrostatisch aufgeladen werden, bevor die Oberfläche der geblähten Perlitpartikel (111, 111', 111") jeweils teilweise mittels des metallischen Werkstoffs (112, 112', 112") beschichtet wird.

15. Verfahren nach einem der Ansprüche 9 bis 14, wobei ein physikalisches Dampfabscheidungsverfahren und/oder ein chemisches Dampfabscheidungsverfahren und/oder eine Flüssigphasenabscheidung und/oder eine Festphasenabscheidung durchgeführt werden, um die Oberfläche der geblähten Perlitpartikel (141, 141', 141 ") jeweils teilweise mittels des metallischen Werkstoffs (112, 112', 112") zu beschichten.
